# EUROPÄISCHE PATENTSCHRIFT

(11) **EP 3 241 768 B1**
(45) Veröffentlichungstag und Bekanntmachung des Hinweises auf die Patenterteilung: **14.11.2018**
(21) Anmeldenummer: 16167896.6
(22) Anmeldetag: 02.05.2016
(51) Int. Cl.: B65B 43/46, B65B 59/00, B65B 43/16, B65B 43/28, B65B 43/44

(54) **VORRICHTUNG ZUR ÜBERGABE VON FOLIENBEUTELN**
DEVICE FOR TRANSFERRING OF FILM BAGS
DISPOSITIF DESTINÉ À LA TRANSMISSION DE SACHETS DE FEUILLES

(43) Veröffentlichungstag der Anmeldung: 08.11.2017
(73) Patentinhaber: INDAG Pouch Partners GmbH, 69214 Eppelheim (DE)
(72) Erfinder: SANDER, Jörg, 69120 Heidelberg (DE); KERNER, Gernot, 69151 Neckargemünd (DE); WEIS, Josef, 69226 Nußloch (DE)
(74) Vertreter: Grünecker Patent- und Rechtsanwälte PartG mbB

(56) Entgegenhaltungen:
- EP-A1- 2 113 462
- WO-A1-2005/100163
- US-A1- 2003 233 812

## Beschreibung

Die Erfindung betrifft eine Vorrichtung zur Übergabe von Folienbeuteln umfassend ein Magazinsystem mit mehreren nebeneinander angeordneten Folienbeutelmagazinen, mehrere nebeneinander angeordnete Beutelaufnahmen zum gleichzeitigen Transportieren von nebeneinander angeordneten Folienbeuteln, wobei jede Beutelaufnahme zum seitlichen Stützen und Halten eines der Folienbeutel ausgebildet ist und Klammern umfasst, die jeweils zum Greifen eines Folienbeutels in einer Beutelaufnahme und zum hängenden Transportieren des Folienbeutels ausgebildet sind, wobei die Vorrichtung derart ausgebildet ist, dass im Betrieb Folienbeutel aus den Folienbeutelmagazinen an die Beutelaufnahmen übergeben und in den Beutelaufnahmen durch die Klammer gegriffen und hängend transportiert werden.

Bislang werden zur Übergabe der Folienbeutel Aufnahmekästen verwendet, die jeweils einen fest zugeordneten Boden aufweisen. Der Boden stützt den Boden des Folienbeutels beim Transport. Dieses System hat jedoch verschiedene Nachteile. Zum einen haben die Aufnahmekästen eine große Masse, was insgesamt den Energieverbrauch negativ beeinflusst. Zum anderen sind diese Aufnahmekästen mit Boden jeweils nur für Folienbeutel einer Längenstreckung (bzw. Höhe) geeignet. Die Folienbeutel werden jedoch auf einer festen Höhe von den Klammern gegriffen. Beutel, die kürzer sind müssen daher in einem Aufnahmekasten mit einem höheren Boden transportiert werden, der sie auf die geeignete Höhe bringt. Das heißt, dass ein Formatwechsel erfordert, dass der Aufnahmekasten ausgetauscht oder jeder Boden einzeln verstellt wird.

Eine Aufgabe der Erfindung ist, die oben genannten Nachteile zu beseitigen, insbesondere eine Vorrichtung bereitzustellen, bei der der Energieverbrauch gesenkt und der Formatwechsel vereinfacht wird.

Die Aufgabe wird dadurch gelöst, dass die Vorrichtung höhenverstellbare Bodenstützelemente umfasst, die derart ausgebildet und angeordnet sind, dass sie jeweils den Boden eines Folienbeutels in einer Beutelaufnahme bis zu der Position, an der die Klammern den Folienbeutel greifen, von unten stützen.

Mit der erfindungsgemäßen Vorrichtung können also Beutelaufnahmen ohne Boden verwendet werden, da kein Boden mehr notwendig ist, wenn die Klammern den Folienbeutel greifen. Dies senkt den Energieverbrauch, weil die Beutelaufnahmen eine geringere Masse aufweisen. Außerdem kann die Beutelaufnahme selbst unverändert bleiben, wenn ein Formatwechsel erfolgt, da es ausreicht, die Bodenstützelemente unabhängig von den Beutelaufnahmen zu verstellen. Somit wird der Formatwechsel vereinfacht.

Folienbeutel sind derart ausgebildet, beispielsweise aus mehreren Folien zusammen geschweißt, dass sie einen Hohlraum einschließen, der an einer Seite offen ist. Die offene Seite wird zum Befüllen der Folienbeutel, beispielsweise mit einem Flüssigen Produkt, verwendet. Im Folgenden wird diese Seite als oberes Ende des Folienbeutels bezeichnet. Die Klammern greifen die Folienbeutel seitlich an ihren oberen Enden. Die der offenen Seite gegenüberliegende Seite des Folienbeutels wird als Boden bezeichnet. In vielen Fällen sind die Folienbeutel flach, wenn sie an die Beutelaufnahme übergeben werden. In den Beutelaufnahmen weisen dann die größeren der Seitenflächen der Folienbeutel in bzw. gegen die Transportrichtung und die schmalen Seiten der Folienbeutel werden seitlich durch die Beutelaufnahme gestützt.

Eine Beutelaufnahme weist mindestens zwei gegenüberliegende Halteelemente auf, zwischen denen der Folienbeutel eingesetzt wird. Ein Halteelement kann beispielsweise ein Seitenstützelement umfassen, das derart ausgebildet ist, dass es die Seiten der Folienbeutel seitlich stützt. Zusätzlich kann jedes Halteelement eine der Klammern umfassen.

Die Seitenstützelemente können jeweils eine Aufnahme zum Aufnehmen je einer Seite eines Folienbeutels umfassen, wobei die Halteelemente im Betrieb derart angeordnet sind, dass die Aufnahmen der gegenüberliegenden Seitenstützelemente einen Beutel seitlich stützen. Diese Aufnahmen können insbesondere zum Aufnehmen der oben beschriebenen schmalen Seiten der flachen Folienbeutel ausgebildet sein.

Die Halteelemente sind quer zur Transportrichtung gegeneinander verschiebbar. So können sie an die Breite des jeweiligen Beutelformats angepasst werden. Außerdem kann die Öffnung des Folienbeutels vergrößert werden, indem die Halteelemente aufeinander zubewegt werden.

Details zu den Halteelementen, insbesondere den Seitenwänden, den Klammern und der Breitenverstellung können der EP 2 113 462 A1 entnommen werden.

Die Beutelaufnahme kann nach unten und nach oben offen sein. Das heißt, die Beutelaufnahme hat nur seitliche Begrenzungen bzw. nur Halteelemente. Die Bodenstützelemente können so von unten die seitlich gestützten Folienbeutel stützen, indem sie tiefer als die Halteelemente und direkt unter den Folienbeuteln angeordnet werden oder indem sie direkt unter den Folienbeuteln angeordnet werden und von unten in die Beutelaufnahme hineinragen. Das heißt, dass die Bodenstützelemente zwischen den Halteelementen angeordnet sein können, solange sie den Folienbeutel stützen.

Die Aufnahmen sind insbesondere derart ausgebildet, dass eine Höhenverstellung der Folienbeutel durch die Aufnahmen nicht beschränkt wird. Die Aufnahmen ermöglichen also eine freie Bewegung der Folienbeutel nach oben oder unten.

Die Bodenstützelemente können jeweils einen oder mehrere Stäbe umfassen, wobei ein Teil des Stabs bzw. der Stäbe den Folienbeutel von unten stützt. Die Bodenstützelemente können insbesondere in Form von Stützhaken ausgebildet sein. Die Stützhaken können beispielsweise aus einem Stab bestehen, der einen Knick, insbesondere einen Knick von 80° bis 100°, insbesondere von 85° bis 95°, insbesondere von 90°, aufweist. Alternativ können die Stützhaken aus zwei Stäben bestehen, die in einem Winkel von 80° bis 100°, insbesondere von 85° bis 95°, insbesondere von 90°, aneinander befestigt, beispielsweise angeschweißt, sind. Solche Stützhaken können im Betrieb derart angeordnet sein, dass das Ende eines Stützhakens, welches die Folienbeutel stützt, in Transportrichtung weist, insbesondere parallel zur Transportrichtung angeordnet ist. Alternativ können die Bodenstützelemente in Form von Stützgabeln oder Stützbogen ausgebildet sein.

Die Bodenstützelemente können untereinander mechanisch gekoppelt sein. Die mechanische Koppelung kann derart ausgebildet sein, dass die relative Position der Bodenstützelemente fest ist oder dass die relative Position der Bodenstützelemente verstellbar ist, wobei im Betrieb die Bodenstützelemente in ihrer Position arretiert sind. Die relative Position der Bodenstützelemente kann alternativ auch mittels einer Steuereinrichtung steuerbar sein.

Die Vorrichtung kann derart ausgebildet sein, dass die Bodenstützelemente im Betrieb bis zu der Position, an der die Klammern den Folienbeutel greifen, synchron und parallel mit den Beutelaufnahmen mit bewegt werden. Die Bodenstützelemente werden also mit den Folienbeuteln mitgeführt. Sie halten die Folienbeutel in einer Position, insbesondere auf der richtigen Höhe, in den Beutelaufnahmen, in der die Klammern die Folienbeutel greifen können. Das Mitführen bzw. die synchrone Bewegung kann mittels mechanischer Koppelung oder mittels einem zusätzlichen Antrieb und optional einer entsprechenden Steuereinrichtung erfolgen.

Weiterhin kann die Vorrichtung derart ausgebildet sein, dass die Bodenstützelemente, nachdem die Folienbeutel von den Klammern gegriffen wurden in eine Ausgangsposition zurück bewegt werden. Insbesondere werden die Bodenstützelemente unmittelbar nachdem die Folienbeutel von den Klammern gegriffen wurden in die Ausgangsposition zurück bewegt, insbesondere während die Folienbeutel noch in der jeweiligen Beutelaufnahme verbleiben. Die Ausgangsposition ist dabei die Position, in der das Bodenstützelement beginnt einen Folienbeutel von unten zu stützen, wenn er aus einem Folienbeutelmagazin an eine Beutelaufnahme übergeben wird. So kann jedes Bodenstützelement, sobald die Stützfunktion nicht mehr benötigt wird zum Stützen von nachkommenden Folienbeuteln verwendet werden. Insbesondere können die Bodenstützelemente in der Vorrichtung umlaufend angeordnet sein.

Die Bodenstützelemente können entlang eines höhenverstellbaren Arms, insbesondere Schwenkarms, bewegbar angeordnet sein, insbesondere um den Arm umlaufend. Der Arm kann im Betrieb an einem Ende fest angeordnet sein und an einem Ende höhenverstellbar sein. Der Arm ist also schwenkbar. Ein solcher Arm wird als Schwenkarm bezeichnet. Alternativ können beide Enden des Arms höhenverstellbar sein, beispielsweise mittels eines Hebemechanismus.

Die Vorrichtung kann derart ausgebildet sein, dass eine Höhenverstellung aller Bodenstützelemente synchron erfolgt, insbesondere mittels mechanischer Koppelung. Insbesondere können die Bodenstützelemente derart angeordnet sein, dass bei der Höhenverstellung des Arms die Bodenstützelemente ebenfalls, insbesondere ohne maschinelle oder manuelle Eingriffe, höhenverstellt werden. Die Vorrichtung kann also derart ausgebildet sein, dass durch eine Höhenverstellung des Arms die Vorrichtung an unterschiedliche Beutellängen angepasst wird.

Zum Anheben und Absenken des Arms kann eine Verstelleinheit vorgesehen sein. Die Vorrichtung kann also eine Verstelleinheit zur Höhenverstellung des Arms umfassen. Die Verstelleinheit kann insbesondere in Form einer Verstelleinheit zur maschinellen Höhenverstellung des Arms ausgebildet sein. Die Verstelleinheit kann zusätzlich zur Abstandsverstellung gegenüberliegender Halteelemente der Beutelaufnahmen ausgebildet sein.

Die Vorrichtung kann eine Steuereinheit umfassen, die für die Steuerung einer oder mehrerer der folgenden Schritte ausgebildet ist: die Abstandsverstellung der Halteelemente der Beutelaufnahmen, die Höhenverstellung der Bodenstützelemente bzw. des Arms und/oder die synchrone Bewegung der Bodenstützelemente.

Weitere Merkmale und Vorteile werden nachfolgend anhand der beispielhaften Figuren erläutert. Dabei zeigt:
Figur 1 eine schematische, nicht maßstabsgetreue Schrägansicht auf die Vorrichtung gemäß einer bevorzugten Ausführungsform,
Figur 2 eine schematische, nicht maßstabsgetreue Seitenansicht auf die Vorrichtung der bevorzugten Ausführungsform,
Figur 3 eine schematische, nicht maßstabsgetreue Schrägansicht auf zwei Reihen von Beutelaufnahmen,
Figur 4 eine schematische, nicht maßstabsgetreue Seitenansicht eines Schwenkarms und umlaufender Stützhaken,
Figur 5 eine schematische, nicht maßstabsgetreue Schrägansicht des Schwenkarms mit umlaufenden Stützhaken,
Figuren 6a bis 6c schematische, nicht maßstabsgetreue Schrägansichten verschiedener Bodenstützelemente und
Figur 7 eine schematische, nicht maßstabsgetreue Darstellung verschiedener Anordnungen der Bodenstützelemente unterhalb des Bodens.

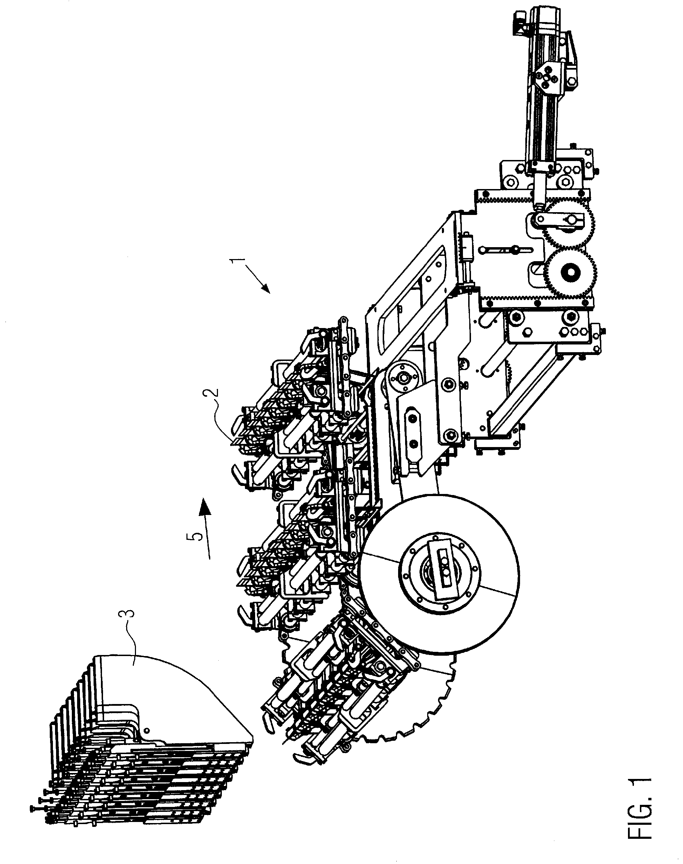

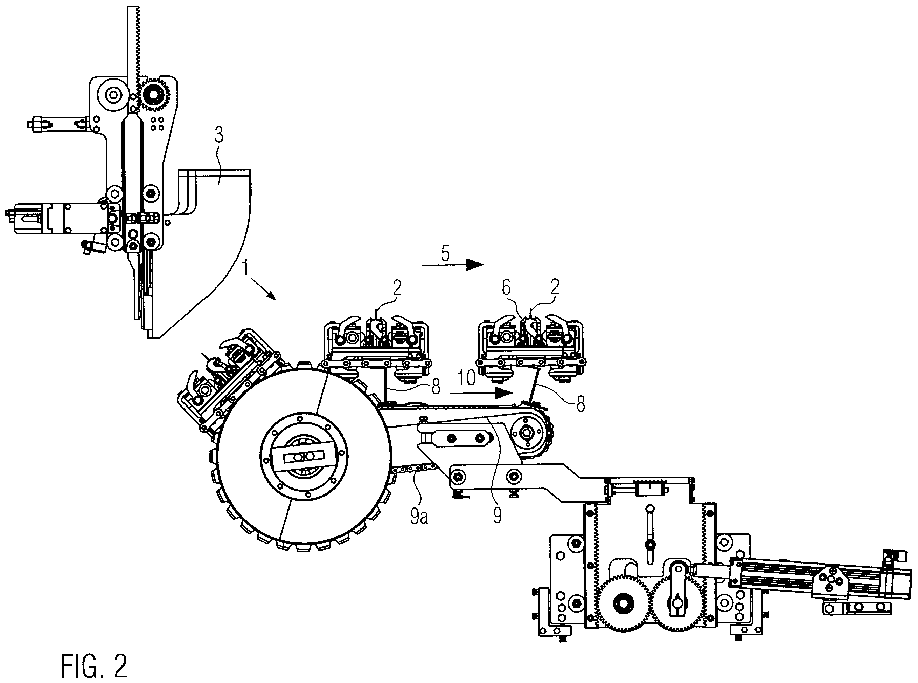

Figur 1 zeigt eine Schrägansicht auf eine bevorzugte Ausführungsform einer Vorrichtung 1 zur Übergabe von Folienbeuteln 2 und Figur 2 zeigt eine Seitenansicht dieser Ausführungsform. Bei den Folienbeuteln handelt es sich um im flachen Zustand rechteckige Folienbeutel, die an einer Seite (der Oberseite) offen und an allen anderen Seiten verschlossen sind. Die der Oberseite gegenüberliegende Seite der Folienbeutel wird als Boden bezeichnet. Die offene Oberseite weist im Transport nach oben, der Boden nach unten. Hier sei angemerkt, dass der Folienbeutel im Bodenbereich derart gefaltet sein kann, dass bei einem Auffalten des Folienbeutels ein Standboden entsteht.

Die Figur zeigt ein Magazinsystem mit nebeneinander angeordneten Folienbeutelmagazinen in Form von Magazinschächten 3. Im Betrieb werden Folienbeutel von oben in die Magazinschächte gestapelt und unten entnommen. Der Schritt, in dem die Folienbeutel aus den Folienbeutelmagazinen an die Beutelaufnahmen übergeben werden, umfasst, dass aus allen Magazinschächten gleichzeitig je ein Folienbeutel an je eine Beutelaufnahme übergeben wird. Das Übergeben erfolgt maschinell, beispielsweise mittels eines hier nicht gezeigten Saugmechanismus. Die gleichzeitig bestückten Beutelaufnahmen bilden eine Reihe nebeneinander angeordneter Beutelaufnahmen. Die bestückten Beutelaufnahmen werden nebeneinander synchron in Transportrichtung 5 bewegt. Das heißt, die Reihe von Beutelaufnahmen ist senkrecht zur Transportrichtung angeordnet. Die Beutelaufnahmen können somit gleichzeitig nebeneinander angeordnete Folienbeutel transportieren.

Die Beutelaufnahmen umfassen Halteelemente 6. Jedes Halteelement umfasst eine Klammer 6a und ein Seitenstützelement 6b mit einer Aufnahme. Die Aufnahme kann beispielsweise, wie hier, eine schlitzförmige, nach oben, unten und zu den Folienbeuteln hin offene Führung sein. Die Führung kann, wie hier gezeigt, abgeschrägte Wände oder alternativ parallel stehende Wände aufweisen. Im Betrieb werden die Folienbeutel von oben in die Führungen eingeführt und sind dann darin seitlich gestützt. Die Aufnahmen sind derart ausgebildet, dass die Folienbeutel nicht gegriffen werden. Durch die Aufnahmen wird eine seitliche Bewegung der Folienbeutel und in diesem Beispiel auch eine Bewegung in bzw. gegen die Transportrichtung beschränkt. Die Aufnahmen sind derart ausgebildet, dass eine Höhenverstellung der Folienbeutel, also eine Bewegung nach oben oder unten, möglich ist. Dies wird ermöglicht, indem die Aufnahmen die Folienbeutel nicht einklemmen, so dass die Beutel problemlos in eingesetzt werden können. In diesem Beispiel wird das erreicht, indem die Führungen unten und oben offen sind. Die Klammern sind derart angeordnet und ausgebildet, dass sie die Folienbeutel seitlich an ihren oberen Enden greifen. Ein Folienbeutel wird dabei vorzugsweise auf jeder Seite von einer Klammer gegriffen.

Die Abstände der Halteelmente sind verstellbar und werden entsprechend der Breite der jeweils verarbeiteten Folienbeutel eingestellt. Bei der Übergabe aus den Folienbeutelmagazinen sind die Folienbeutel flach und haben somit ihre maximale Breite. Die Halteelemente sind zu diesem Zeitpunkt in einem Abstand angeordnet, der etwa der maximalen Breite entspricht, so dass die Folienbeutel problemlos in die Beutelaufnahmen eingeführt und in diesen sicher seitlich gestützt werden können.

Die Vorrichtung ist so ausgebildet, dass die Abstände der Halteelemente zueinander mittels einer Verstelleinrichtung verstellbar sind. Auf dem Transportweg der Beutel in den Aufnahmekästen kann optional der Abstand der Halteelemente reduziert werden. Dadurch können die Folienbeutel an ihrer Oberseite geöffnet werden, zum Beispiel, um eine Flüssigkeit einzufüllen. Wenn der Abstand zum Zeitpunkt des Klammerzugriffs minimal kleiner ausfällt als die Beutelbreite kann ein maximaler Klammereingriff garantiert werden.

Die Folienbeutel werden in den Beutelaufnahmen transportiert und an einer bestimmten Position greifen eine oder mehrere Klammern 6a jeweils einen Folienbeutel. Die Klammern greifen den Folienbeutel in diesem Fall seitlich an ihren oberen Enden. Die Klammern sind derart ausgebildet, dass sie den Folienbeutel hängend transportieren können. Das heißt, dass die Greifkraft der Klammern ausreicht, um den Folienbeutel sicher zu halten und ein Herabfallen zu vermeiden. Die Folienbeutel werden dann mittels der Klammern weiter transportiert.

In den Figuren sind ebenfalls höhenverstellbare Bodenstützelemente 8 gezeigt, die derart ausgebildet und angeordnet sind, dass sie im Betrieb jeweils den Boden eines Folienbeutels in einer Beutelaufnahme bis zu der Position, an der die Klammern den Folienbeutel greifen, von unten stützen. Dazu laufen die Bodenstützelemente im Betrieb synchron mit den Beutelaufnahmen mit. Die synchrone Bewegung wird hier durch eine mechanische Koppelung erzielt, kann aber alternativ auch durch eigene Antriebe erfolgen, die mittels einer Steuereinrichtung gesteuert werden.

Die Bodenstützelemente werden nach dem Greifen der entsprechenden Folienbeutel durch die Klammern wieder zurück in die Ausgangsposition transportiert, an der die Übergabe von Folienbeuteln in die Beutelaufnahmen erfolgt. Die Bodenstützelemente sind hier umlaufend um einen Schwenkarm 9 angeordnet. Im Betrieb laufen die Stützhaken um den Schwenkarm in der mit dem Bezugszeichen 10 gekennzeichneten Richtung. Hier laufen die Bodenstützelemente beispielhaft mittels einer Kette 9a angetrieben um den Schwenkarm.

Die Bodenstützelemente sind hier in Form von Stützhaken ausgebildet. Beispielsweise kann es sich um Metallstäbe handeln, die einen Knick, in diesem Beispiel einen Knick von etwa 90°, aufweisen. Andere Winkel sind möglich und die Haken können auch aus mehreren Metallstäben zusammengesetzt sein. Wie hier zu erkennen ist, haben die Haken einen Teilbereich, der im Wesentlichen senkrecht zu der Oberfläche des Schwenkarms angeordnet ist und einen Teilbereich, der während dem Stützen der Folienbeutel von unten in Transportrichtung weist, in diesem Beispiel im Wesentlichen parallel zur Transportrichtung angeordnet ist. Statt der Stützhaken können auch andere Bodenstützelemente vorgesehen sein. Wenn die Bodenstützelemente breit ausgebildet sind, kann ein Kippen bzw. Schrägstehen der Behälter vermieden werden.

In dem gezeigten Beispiel sind die Stützhaken nebeneinander in einer Reihe entlang einer Querstange angeordnet und mit dieser integral ausgebildet. Alternativ können sie auch an dieser befestigt sein oder entlang dieser Querstange verfahrbar sein.

Wenn die Stützhaken und die Querstange integral ausgebildet sind, ist der Abstand der Stützhaken fest. Wenn die Stützhaken entlang der Querstange verfahrbar sind, kann der Abstand mittels einer Verstelleinheit, insbesondere automatisch, eingestellt werden. Dies kann vor der Aufnahme des Betriebs oder im Betrieb erfolgen.

Die Abstände der Stützhaken sind oder werden im Betrieb derart eingestellt, dass sichergestellt wird, dass jedem Folienbeutel mindestens ein Stützhaken zugeordnet ist. Wenn jedem Folienbeutel genau ein Stützhaken zugeordnet ist, ist es vorzuziehen, wenn der Stützhaken bezogen auf den Boden des Folienbeutels etwa mittig angeordnet ist. In diesem Fall hat eine Reihe von Stützhaken etwa den gleichen Abstand wie die Folienbeutel in dieser Reihe. Wenn für einen Folienbeutel zwei Stützhaken vorgesehen sind, können diese jeweils zwischen der Mitte des Bodens des Folienbeutels und einem äußeren Rand des Bodens auf verschiedenen Seiten der Mitte angeordnet sein.

Optional können die Abstände der Stützhaken zusammen mit den Abständen der Halteelemente der Beutelaufnahmen verstellbar sein, indem die gleiche Verstelleinheit zum Verstellen verwendet wird oder indem eine Verstelleinheit für die Halteelemente mit einer Verstelleinheit für die Stützelemente gekoppelt wird. Alternativ können für die Halteelemente und für die Stützhaken separate Verstelleinheiten vorgesehen sein und die jeweiligen Positionen mittels einer gemeinsamen Steuereinrichtung 12 gesteuert werden.

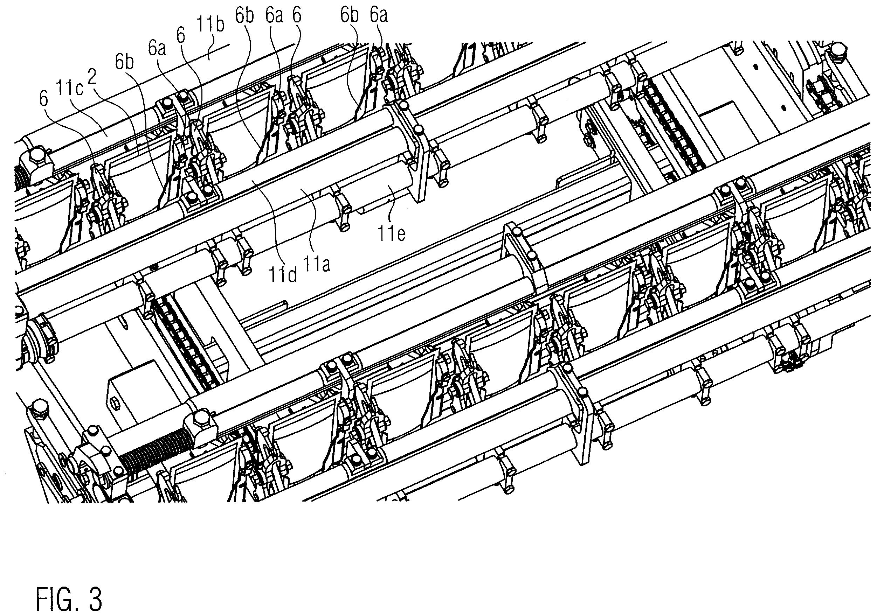

Figur 3 zeigt einen in Schrägansicht von oben auf die Beutelaufnahmen mit den Halteelementen 6. Mit Hilfe der Querstangen 11a und 11b werden die Klammern 6b betätigt. Diese Querstangen sind so angeordnet, dass sie um ihre Längsachse drehbar sind, wobei durch Drehen dieser Stangen die Klammern betätigt werden. Die Halteelemente 6 sind auf verschiebbaren Rohren, dem Rohr 11e und einem entsprechenden (in der Figur nicht sichtbaren) Rohr, befestigt. Das Rohr 11e ist mit der Stange 11d verbunden und das entsprechende nicht sichtbare Rohr mit der Stange 11c. Wird eine der Stangen 11c oder 11d quer zur Transportrichtung verschoben (oder beide relativ zueinander), ändern sich die Abstände der Halteelemte und somit auch die Breite der Beutelaufnahmen. Zusätzlich dienen das Rohr 11e und das entsprechende nicht sichtbare Rohr jeweils als Lagerung der Stangen 11a und 11d. Als Verstelleinrichtungen zum Verstellen der Abstände der Halteelemente in derartigen Vorrichtungen und als Betätigungsmechanismen für die Klammern können geeignete bekannte Verstelleinrichtungen verwendet werden. Hier sei beispielhaft auf die oben genannte Druckschrift EP 2 113 462 A1 verwiesen.

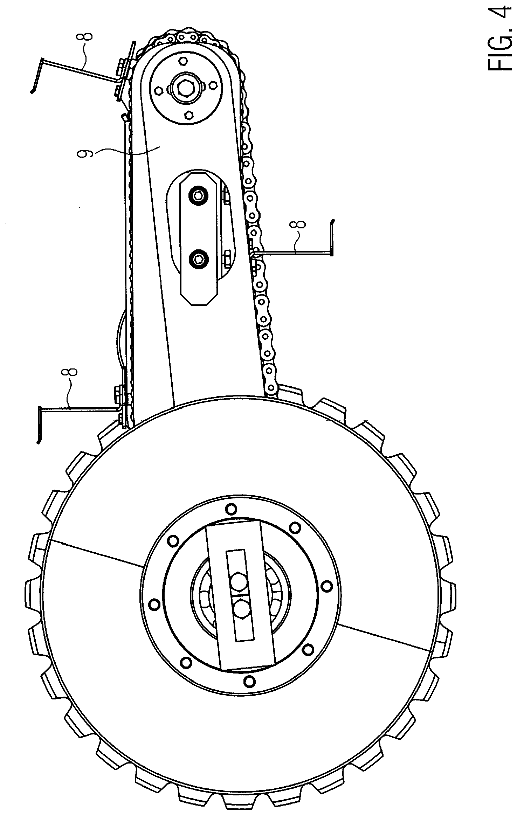

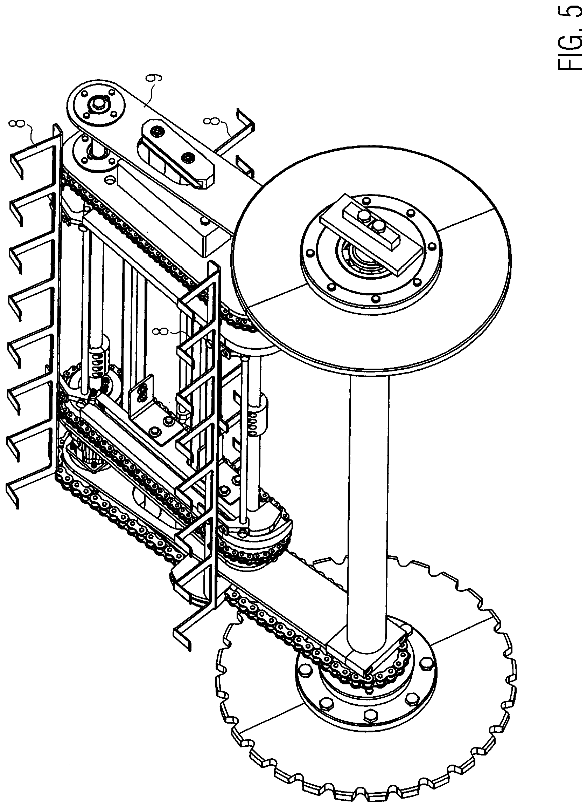

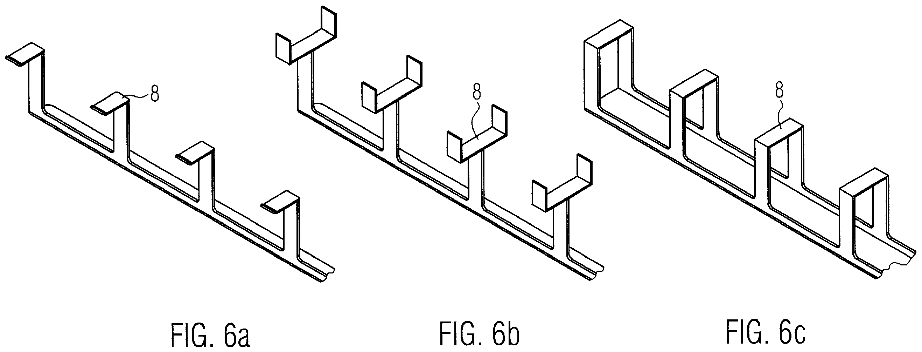

Figur 4 zeigt eine Seitenansicht von einem Schwenkarm und umlaufenden Bodenstützelementen, die in der erstem Ausführungsform verwendet werden können, und Figur 5 zeigt eine Schrägansicht von oben auf den Schwenkarm und die umlaufenden Bodenstützelemente. Hier sind die Bodenstützelemente in Form von Stützhaken ausgebildet, es können jedoch auch andere Bodenstützelemente verwendet werden, beispielsweise die in Figur 6b und 6c gezeigten.

Figuren 6a bis 6c zeigen verschiedene Varianten, wie die Bodenstützelemente in den oben genannten Beispielen ausgebildet sein können. Figur 6a zeigt Bodenstützelemente in Form von Haken. Figur 6b zeigt Bodenstützelemente in Form einer Stützgabel und Figur 6c zeigt Bodenstützelemente in Form von Stützbogen.

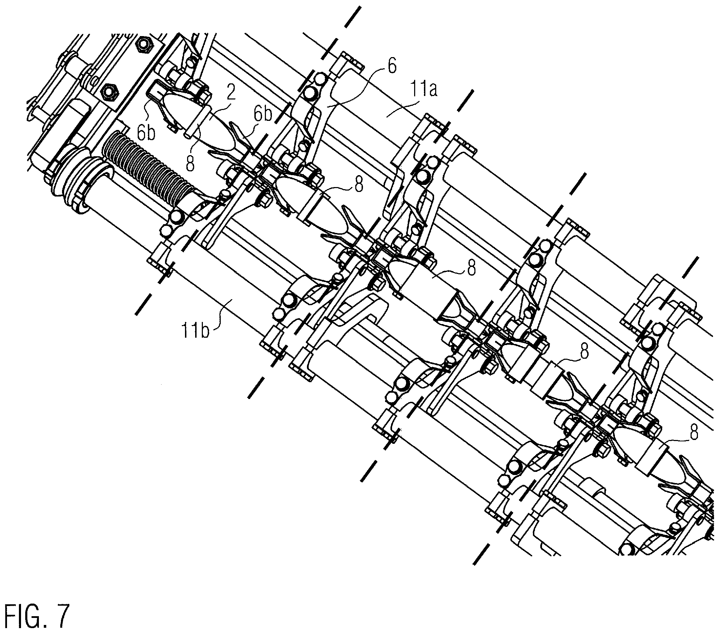

Mögliche Anordnungen der Bodenstützelemente in einer Ansicht von unten sind im Detail in Figur 7 gezeigt. Wie in der Figur gezeigt, kann jeweils ein Stützhaken pro Folienbeutel mittig unter dem Folienbeutel angeordnet sein. Diese Stützhaken können so breit sein, dass sie sich bis unterhalb der Klammern erstrecken. Dies verhindert ein Kippen der Folienbeutel.

Alternativ können zwei Stützhaken pro Folienbeutel dezentral unter dem Folienbeutel angeordnet sein oder eine Stützgabel kann etwa mittig unter dem Folienbeutel angeordnet sein. Eine Stützgabel ermöglicht eine bessere Stabilisierung der Folienbeutel. Auch die Stützgabel kann zur weiteren Stabilisierung breiter ausgebildet sein oder es können zwei dezentrale Stützgabeln vorgesehen sein (hier nicht gezeigt). Alle Bodenstützelemente können im Prinzip auch aus Rundstäben ausgebildet ist, was in der Figur nur für einen einzelnen mittigen Stützhaken gezeigt ist, aber auch für anders angeordnete und ausgebildete Bodenstützelemente anwendbar ist. Es sei angemerkt, dass hier beispielhaft verschiedene Ausführungen in einer Figur gezeigt sind, dass jedoch typischerweise alle Bodenstützelemente gleich ausgebildet sind. Dies ist durch die Trennlinien angedeutet.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Vorrichtung (1) zur Übergabe von Folienbeuteln (2) umfassend
ein Magazinsystem mit mehreren nebeneinander angeordneten Folienbeutelmagazinen (3),
mehrere nebeneinander angeordnete Beutelaufnahmen zum gleichzeitigen Transportieren von nebeneinander angeordneten Folienbeuteln (2), wobei jede Beutelaufnahme zum seitlichen Stützen und Halten eines der Folienbeutel (2) ausgebildet ist und Klammern (6a) umfasst, die jeweils zum Greifen eines Folienbeutels (2) in einer Beutelaufnahme und zum hängenden Transportieren des Folienbeutels (2) ausgebildet sind,
wobei die Vorrichtung derart ausgebildet ist, dass im Betrieb Folienbeutel (2) aus den Folienbeutelmagazinen (3) an die Beutelaufnahmen übergeben und in den Beutelaufnahmen durch die Klammern (6a) gegriffen und hängend transportiert werden,
**gekennzeichnet durch**
höhenverstellbare Bodenstützelemente (8), die derart ausgebildet und angeordnet sind, dass sie jeweils den Boden eines Folienbeutels (2) in einer Beutelaufnahme bis zu der Position, an der die Klammern (6a) den Folienbeutel (2) greifen, von unten stützen,
wobei die Bodenstützelemente (8) umlaufend angeordnet sind.

2. Vorrichtung nach Anspruch 1, wobei die Beutelaufnahme nach unten und nach oben offen ist.

3. Vorrichtung nach Anspruch 1 oder 2, wobei die Bodenstützelemente (8) in der Vorrichtung in Form von Stützhaken ausgebildet sind.

4. Vorrichtung nach einem der Ansprüche 1 bis 3, wobei die Vorrichtung derart ausgebildet ist, dass die Bodenstützelemente (8) im Betrieb bis zu der Position, an der die Klammern (6a) den Folienbeutel (2) greifen, synchron und parallel mit den Beutelaufnahmen mit bewegt werden.

5. Vorrichtung nach Anspruch 4, wobei die synchrone Bewegung mittels mechanischer Koppelung oder mittels einer Steuereinrichtung und einem zusätzlichen Antrieb erfolgt.

6. Vorrichtung nach einem der Ansprüche 1 bis 5, wobei die Vorrichtung derart ausgebildet ist, dass die Bodenstützelemente (8), nachdem der von ihnen gestützte Folienbeutel (2) von den Klammern (6a) gegriffen wurde, in eine Ausgangsposition zurück bewegt werden.

7. Vorrichtung nach einem der Ansprüche 1 bis 6, wobei die Bodenstützelemente (8) in der Vorrichtung entlang eines höhenverstellbaren Arms (9) bewegbar angeordnet sind.

8. Vorrichtung nach Anspruch 7, wobei die Vorrichtung derart ausgebildet ist, dass die Bodenstützelemente (8) um den höhenverstellbaren Arm (9) umlaufend angeordnet sind.

9. Vorrichtung nach einem der Ansprüche 1 bis 8, wobei die Vorrichtung derart ausgebildet ist, dass eine Höhenverstellung aller Bodenstützelemente (8) synchron erfolgt, insbesondere mittels mechanischer Koppelung.

10. Vorrichtung nach Anspruch 7 bis 9, wobei die Bodenstützelemente (8) derart angeordnet sind, dass durch eine Höhenverstellung des Arms (9) die Bodenstützelemente (8) ebenfalls höhenverstellt werden.

11. Vorrichtung nach einem der Ansprüche 7 bis 10, wobei durch eine Höhenverstellung des Arms (9) die Vorrichtung an unterschiedliche Beutellängen angepasst wird.

12. Vorrichtung nach einem der Ansprüche 7 bis 11, wobei zum Anheben und Absenken des Arms (9) eine Verstelleinheit vorgesehen ist.

13. Vorrichtung nach Anspruch 12, wobei die Verstelleinheit zusätzlich zur Abstandsverstellung gegenüberliegender Halteelemente (6) der Beutelaufnahmen ausgebildet ist.

14. Vorrichtung nach einem der Ansprüche 7 bis 13, wobei ein bzw. der zusätzliche Antrieb die Bodenstützelemente im Betrieb derart antreibt, dass sie um den höhenverstellbaren Arm herum laufen.

## Claims

1. Apparatus (1) for the transfer of foil bags (2), comprising
a magazine system with a plurality of adjacently arranged foil bag magazines (3),
a plurality of adjacently arranged bag receptacles for the simultaneous transportation of adjacently arranged foil bags (2), wherein each bag receptacle is configured to laterally support and hold one of the foil bags (2) and comprises clamps (6a) which are each configured for gripping a foil bag (2) in a bag receptacle and for the suspended transportation of the foil bag (2),
wherein the apparatus is configured such that during operation foil bags (2) are transferred from the foil bag magazines (3) to the bag receptacles and are gripped in the bag receptacles by the clamps (6a) and are transported in suspended fashion,
**characterized by**
height-adjustable bottom support elements (8) which are configured and arranged such that they respectively support from below the bottom of a foil bag (2) in a bag receptacle up to the position where the clamps (6a) grip the foil bag (2),
wherein the bottom support elements (8) are arranged to circulate.

2. Apparatus according to claim 1, wherein the bag receptacle is open downwards and upwards.

3. Apparatus according to claim 1 or 2, wherein the bottom support elements (8) are configured in the apparatus in the form of support hooks.

4. Apparatus according to any one of claims 1 to 3, wherein during operation the apparatus is configured such that the bottom support elements (8) are moved along in synchronism and in parallel with the bag receptacles up to the position where the clamps (6a) grip the foil bag (2).

5. Apparatus according to claim 4, wherein the synchronous movement takes place by way of mechanical coupling or by way of a control device and an additional drive.

6. Apparatus according to any one of claims 1 to 5, wherein the apparatus is configured such that the bottom support elements (8) are moved back into an initial position after the foil bag (2) supported by them has been gripped by the clamps (6a).

7. Apparatus according to any one of claims 1 to 6, wherein the bottom support elements (8) are arranged in the apparatus to be movable along a height-adjustable arm (9).

8. Apparatus according to claim 6, wherein the apparatus is configured such that the bottom support elements (8) are arranged to circulate around the height-adjustable arm (9).

9. Apparatus according to any one of claims 1 to 8, wherein the apparatus is configured such that a height adjustment of all bottom support elements (8) takes place in synchronism, particularly by way of mechanical coupling.

10. Apparatus according to claim 7 to 9, wherein the bottom support elements (8) are arranged such that the bottom support elements (8) are also height-adjustable by way of a height adjustment of the arm (9).

11. Apparatus according to any one of claims 7 to 10, wherein the apparatus is adapted to different bag lengths by way of a height adjustment of the arm (9).

12. Apparatus according to any one of claims 7 to 11, wherein an adjustment unit is provided for lifting and lowering the arm (9).

13. Apparatus according to claim 12, wherein the adjustment unit is additionally configured for the distance adjustment of opposing holding elements (6) of the bag receptacles.

14. Apparatus according to any one of claims 7 to 13, wherein a or the additional drive drives the bottom support elements during operation such that they circulate around the height-adjustable arm.

## Revendications

1. Dispositif (1) pour le transfert de sachets en feuille (2), comprenant
un système de magasin avec plusieurs magasins de sachets en feuille (3) agencés côte à côte,
plusieurs logements d'accueil de sachet agencés côte à côte pour le transport simultané de sachets en feuille (2) agencés côte à côte, chaque logement d'accueil de sachet étant conçu pour l'appui latéral et le maintien de l'un des sachets en feuille (2), et comprenant des pinces (6a), qui sont conçus chacune pour la préhension d'un sachet en feuille (2) dans un logement d'accueil de sachet et pour le transport suspendu du sachet en feuille (2),
le dispositif étant configuré de façon telle, qu'en fonctionnement, des sachets en feuille (2) soient transférés des magasins de sachets en feuille (3) aux logements d'accueil de sachet, et soient saisis par les pinces (6a) dans les logements d'accueil de sachet, et transportés de manière suspendue,
**caractérisé par**
des éléments d'appui de fond (8) réglables en hauteur, qui sont configurés et agencés de manière à soutenir par le bas, le fond d'un sachet en film (2) dans un logement d'accueil de sachet respectif, jusqu'à la position dans laquelle les pinces (6a) saisissent le sachet en film (2), les éléments d'appui de fond (8) étant agencés en révolution.

2. Dispositif selon la revendication 1, dans lequel le logement d'accueil de sachet est ouvert vers le bas et vers le haut.

3. Dispositif selon la revendication 1 ou la revendication 2, dans lequel les éléments d'appui de fond (8) dans le dispositif sont réalisés sous la forme de crochets d'appui.

4. Dispositif selon l'une des revendications 1 à 3, le dispositif étant configuré de manière telle, qu'en fonctionnement, les éléments d'appui de fond (8) soient entraînés en déplacement de manière synchronisée et parallèlement avec les logements d'accueil de sachet, jusqu'à la position dans laquelle les pinces (6a) saisissent les sachets en feuille (2).

5. Dispositif selon la revendication 4, dans lequel le mouvement de déplacement synchronisé est effectué au moyen d'un couplage mécanique ou au moyen d'un dispositif de commande et d'un entraînement supplémentaire.

6. Dispositif selon l'une des revendications 1 à 5, le dispositif étant configuré de manière telle, que les éléments d'appui de fond (8) soient, après que le sachet en feuille (2) qu'ils soutiennent ait été saisi par les pinces (6a), déplacés en retour dans une position initiale.

7. Dispositif selon l'une des revendications 1 à 6, dans lequel les éléments d'appui de fond (8) sont agencés de manière déplaçable dans le dispositif le long d'un bras (9) réglable en hauteur.

8. Dispositif selon la revendication 7, le dispositif étant configuré de manière telle, que les éléments d'appui de fond (8) soient agencés en révolution autour du bras (9) réglable en hauteur.

9. Dispositif selon l'une des revendications 1 à 8, le dispositif étant configuré de manière telle qu'un réglage en hauteur de tous les éléments d'appui de fond (8) s'effectue de manière synchronisée, notamment par couplage mécanique.

10. Dispositif selon les revendications 7 à 9, dans lequel les éléments d'appui de fond (8) sont agencés de manière telle, que par un réglage en hauteur du bras (9), les éléments d'appui de fond (8) soient également réglés en hauteur.

11. Dispositif selon l'une des revendications 7 à 10, dans lequel grâce à un réglage en hauteur du bras (9), le dispositif peut être adapté à différentes longueurs de sachet.

12. Dispositif selon l'une des revendications 7 à 11, dans lequel pour assurer le soulèvement et l'abaissement du bras (9), il est prévu une unité de réglage.

13. Dispositif selon la revendication 12, dans lequel l'unité de réglage est en outre conçue pour régler la distance d'espacement d'éléments de maintien (6) mutuellement opposés des logements d'accueil de sachet.

14. Dispositif selon l'une des revendications 7 à 13, dans lequel en cours de fonctionnement, un ou l'entraînement supplémentaire entraîne les éléments d'appui de fond de manière telle, qu'ils soient en révolution autour du bras réglable en hauteur.
